# EUROPEAN PATENT APPLICATION

(11) **EP 2 571 206 A1**
(43) Date of publication of application: **20.03.2013**
(21) Application number: 12184212.4
(22) Date of filing: 13.09.2012
(51) Int. Cl.: H04L 12/58

(54) **Image processing apparatus, image processing system**

(30) Priority: 16.09.2011 JP 2011203734
(71) Applicant: Ricoh Company, Ltd., Tokyo 143-8555 (JP)
(72) Inventor: Sato, Yoshimi, Tokyo, 143-8555 (JP); Umetsu, Fumihiro, Tokyo, 143-8555 (JP)
(74) Representative: Maury, Richard Philip

(57) **Abstract**

An image processing apparatus sends an encrypted e-mail to a terminal device of a user connected by a communication network. The image processing apparatus includes an acquiring unit configured to analyze a public key certificate of the user and acquire expiration information of the public key certificate, when registering the public key certificate of the user; a management unit configured to manage user information including the expiration information acquired by the acquiring unit and the public key certificate of the user, the expiration information and the public key certificate being associated with each other in the user information; a determining unit configured to determine whether the public key certificate of the user is valid based on the expiration information managed by the management unit; and a sending unit configured to send the encrypted e-mail, when the determining unit determines that the public key certificate is valid.

## Description

### BACKGROUND OF THE INVENTION

### 1. Field of the Invention

The present invention relates to an image processing apparatus and an image processing system.

### 2. Description of the Related Art

Conventionally, the S/MIME (Secure/Multipurpose Internet Mail Extensions) is known as an encryption protocol for e-mails based on the Public Key Infrastructure (PKI). A certificate used in S/MIME has an expiration date set in advance, and the certificate becomes outdated with the passage of time. Therefore, when using a certificate, the validity of the certificate is to be verified so that the user does not erroneously send an e-mail that is encrypted with a public key certificate that has expired.

Accordingly, in the conventional technology, there are devices having a mail client function that performs the following method when the user uses a public key certificate to send an e-mail. Specifically, the validity of the certificate is verified, and when the certificate has expired, the e-mail is not sent. Furthermore, the validity of certificates of addresses collectively specified in a list is verified, and when there are certificates that are determined as invalid, the invalid certificates are displayed (see, for example, Patent Document 1).

However, in mail client software having a conventional S/MIME function, the verification of the expiration date of the public key certificate is performed when an instruction to start sending the e-mail is given. When the validity is verified in response to an instruction to start sending the e-mail, the following problem arises. That is, even if the public key certificate is expired when the user starts creating the e-mail, the user notices that the e-mail cannot be sent after making e-mail settings and editing the e-mail contents. In this case, the user's operations are wasted.

Furthermore, in the method described in Patent Document 1, when addresses are collectively specified in a list, verification starts for the certificates associated to the respective addresses. However, a public key certificate is stored in an address book as part of user information, and the public key certificate is stored in the address book in a binary format or in a text format by being encoded by base64. Therefore, in order to verify the expiration date of a public key certificate, it is necessary to perform file format conversion and syntax analysis for extracting information necessary for the comparing dates.

Therefore, as the number of addresses for sending the e-mail increases, the time required for verifying the public key certificate increases, and therefore operability for the user is deteriorated when the verification is performed during the user's operation.

Patent Document 1: Japanese Laid-Open Patent Publication No. 2007-60415

### SUMMARY OF THE INVENTION

The present invention provides an image processing apparatus and an image processing system, in which one or more of the above-described disadvantages are eliminated.

A preferred embodiment of the present invention provides an image processing apparatus and an image processing system with which operability for the user is improved when sending encrypted e-mails.

According to an aspect of the present invention, there is provided an image processing apparatus for sending an encrypted e-mail to a terminal device of a user connected by a communication network, the image processing apparatus including an expiration date information acquiring unit configured to analyze a public key certificate of the user and acquire expiration date information of the public key certificate, when registering the public key certificate of the user; a user information management unit configured to manage user information including the expiration date information acquired by the expiration date information acquiring unit and the public key certificate of the user, the expiration date information and the public key certificate being associated with each other in the user information; an expiration date determining unit configured to determine whether the public key certificate of the user is valid based on the expiration date information managed by the user information management unit; and a mail sending unit configured to send the encrypted e-mail, when the expiration date determining unit determines that the public key certificate is valid.

According to an aspect of the present invention, there is provided an image processing system including a terminal device of a user; and an image processing apparatus for sending an encrypted e-mail to the terminal device of the user, the image processing apparatus being connected to the terminal device by a communication network, the image processing apparatus including an expiration date information acquiring unit configured to analyze a public key certificate of the user and acquire expiration date information of the public key certificate, when registering the public key certificate of the user, a user information management unit configured to manage user information including the expiration date information acquired by the expiration date information acquiring unit and the public key certificate of the user, the expiration date information and the public key certificate being associated with each other in the user information, an expiration date determining unit configured to determine whether the public key certificate of the user is valid based on the expiration date information managed by the user information management unit, and a mail sending unit configured to send the encrypted e-mail, when the expiration date determining unit determines that the public key certificate is valid.

### BRIEF DESCRIPTION OF THE DRAWINGS

Other objects, features and advantages of the present invention will become more apparent from the following detailed description when read in conjunction with the accompanying drawings, in which:
FIG. 1 is an overall diagram of an image processing system according to the present embodiment;
FIG. 2 illustrates a configuration of a software module of an image processing apparatus according to the present embodiment;
FIG. 3 illustrates an example of a screen of a device operation unit;
FIG. 4 illustrates an example of a warning message to the user displayed on the screen of the device operation unit;
FIG. 5 illustrates an example of a conventional S/MIME transmission sequence;
FIG. 6 illustrates an example of an S/MIME transmission sequence according to the present embodiment;
FIGS. 7A and 7B illustrate examples of data structures of an address book when the public key certificate is registered;
FIG. 8 is a flowchart of a process of registering a public key certificate; and
FIG. 9 is a flowchart of a process of deleting the public key certificate.

### DETAILED DESCRIPTION OF THE PREFERRED EMBODIMENTS

A description is given, with reference to the accompanying drawings, of embodiments of the present invention.

### Image processing system: functional block

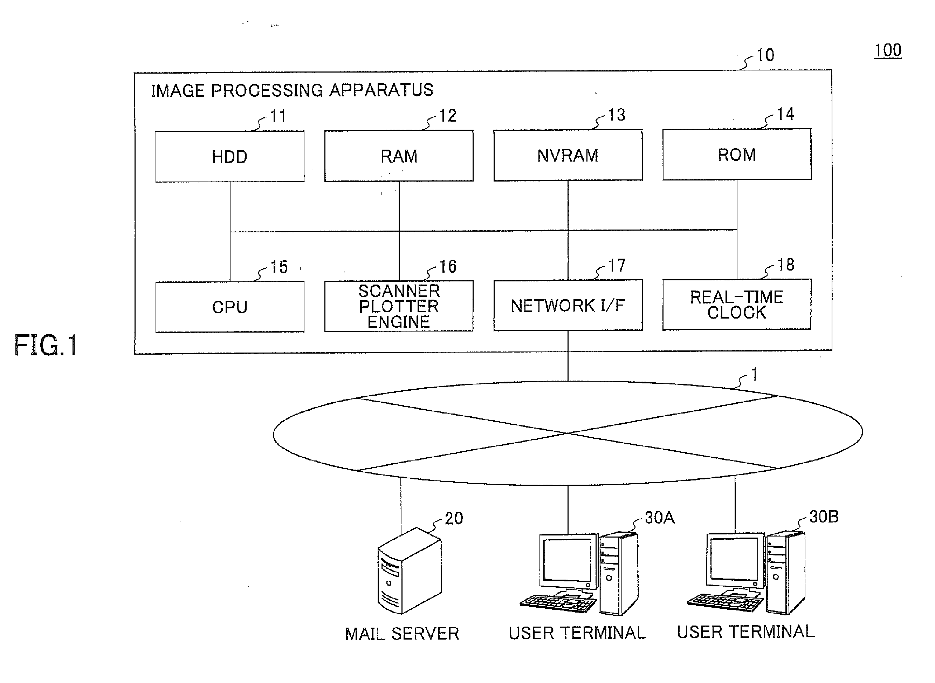

FIG. 1 is an overall diagram of an image processing system according to the present embodiment. As shown in FIG. 1, an image processing system 100 includes an image processing apparatus 10, a mail server 20, and user terminals 30A and 30B, which are connected via a communication network 1 such as the Internet.

The image processing apparatus 10 is a multi-function peripheral (MFP: a peripheral device including multiple functions) in which a scanner, a printer, a fax machine, and a copier are included in a single body.

The image processing apparatus 10 includes a HDD (Hard Disk Drive) 11, a RAM (Random Access Memory) 12, a NVRAM (Non Volatile RAM) 13, a ROM (Read-Only Memory) 14, a CPU (Central Processing Unit) 15, a scanner plotter engine 16, a network I/F 17, and a real-time clock 18, which are connected by a bus.

The HDD 11 is a high-capacity non-volatile memory, and stores user information included in an address book, image information obtained by scanning, and e-mail sending jobs.

The RAM 12 is used for temporarily storing various kinds of data generated during processing operations by the CPU 15 and respective modules, and is used as a working memory for processing, and stores variables.

The NVRAM 13 stores data to be held even when the power of the image processing apparatus 10 is turned off. Furthermore, the NVRAM 13 stores settings indicating whether encryption of the device is valid or invalid.

The ROM 14 stores basic programs of the image processing apparatus 10, various programs such as a mail sending program which are to function as various means of the image processing apparatus 10, and various kinds of data.

The CPU 15 uses the RAM 12 as a working memory based on programs stored in the ROM 14, and controls the respective units of the image processing apparatus 10 to execute functions such as the scanner function, the copy function, the printer function, the fax function, and the mail sending function. Furthermore, the CPU 15 controls the various modules described below.

The scanner plotter engine 16 executes printing and scanning under the control of the CPU 15. For example, the scanner plotter engine 16 scans an image of an original document, and records (outputs) the image data obtained by the scanning on a sheet by a predetermined printing method such as an electrophotographic method.

The network I/F 17 exchanges various kinds of data with the mail server 20 and the user terminals 30A and 30B outside the image processing apparatus 10 connected by the communication network 1.

The real-time clock 18 measures the present time by UTC (Universal Time, Coordinated), for example.

By the above configuration, the image processing apparatus 10 sends a document by an e-mail on which predetermined encryption is performed, to the mail server 20 connected to the communication network 1.

The mail server 20 receives encrypted e-mails sent from the image processing apparatus 10 via the communication network 1, and stores the e-mails.

The user terminals 30A and 30B are, for example, a PC (personal computer), in which a secret key corresponding to a public key certificate is installed. The user terminals 30A and 30B acquire, from the mail server 20, encrypted e-mails addressed to the user. In the example of FIG. 1, two user terminals 30A and 30B are illustrated; however an embodiment of the present invention is not so limited, and there may be more than two user terminals.

### Configuration of software module of image processing apparatus

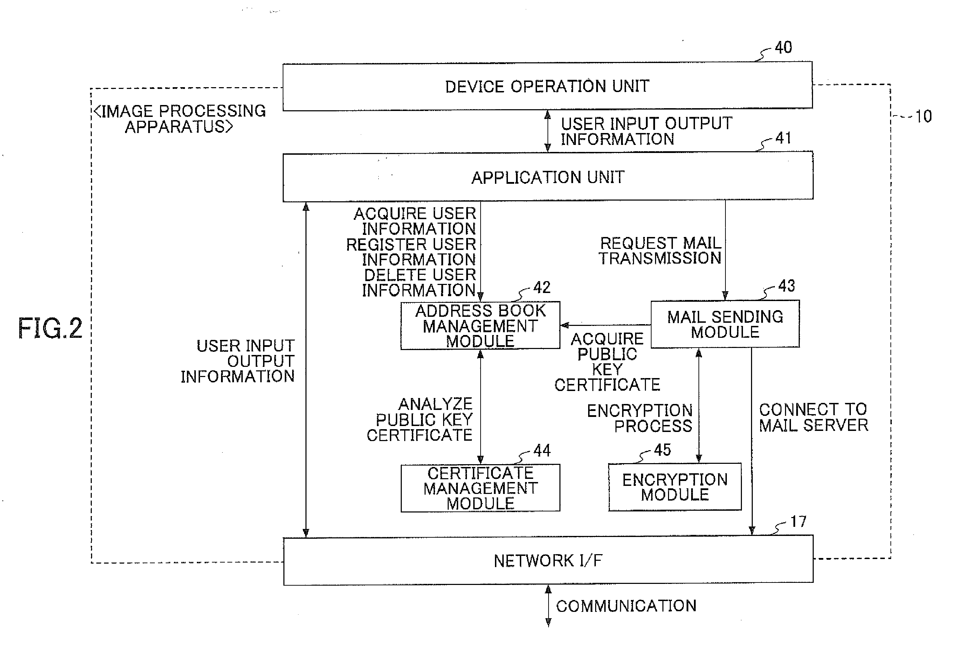

FIG. 2 illustrates a configuration of a software module of the image processing apparatus 10 according to the present embodiment. As shown in FIG. 2, the image processing apparatus 10 includes a device operation unit 40, an application unit (expiration date determining unit) 41, an address book management module (user information management unit) 42, a mail sending module (mail sending unit) 43, a certificate management module (expiration date information acquiring unit) 44, and an encryption module 45.

The device operation unit 40 is, for example, an operation panel, which receives user input information input by the user, and transfers the received user input information to the application unit 41. The device operation unit 40 displays output information transferred from the application unit 41.

The network I/F 17 receives user input information when the user terminals 30A and 30B outside the image processing apparatus 10 access the image processing apparatus 10 via the communication network 1, and transfers the received user input information to the application unit 41. Furthermore, the network I/F 17 transfers the output information transferred from the application unit 41 to the user terminals 30A and 30B.

The application unit 41 performs processing based on user input information acquired from the device operation unit 40 or the network I/F 17, and transfers the processing results as output information to the device operation unit 40 or the network I/F 17. As described above, the application unit 41 provides a function as a user interface for using services of the image processing apparatus 10.

For example, when an instruction requesting to acquire, register, or delete the user information is received from the device operation unit 40 or the user terminals 30A and 30B connected via the network I/F 17, the application unit 41 reports the request to the address book management module 42. Furthermore, when a mail transmission request is received from the device operation unit 40 or the user terminals 30A and 30B connected via the network I/F 17, the application unit 41 reports the mail transmission request to the mail sending module 43.

The application unit 41 determines the validity of the public key certificate of the user, based on expiration date information of the public key certificate managed by the address book management module 42. Specifically, when a report indicating that an encryption option is set to be valid or a report indicating that an e-mail address is selected as the sending address is received from the device operation unit 40 or the user terminals 30A and 30B connected via the network I/F 17, the application unit 41 determines the validity of a public key certificate of the user corresponding to the selected e-mail address.

At this time, the application unit 41 requests the address book management module 42 to call user information corresponding to the selected e-mail address, acquires the starting date and the expiration date of the public key certificate, and compares the dates with the present time. Based on the comparison result, when it is determined that the public key certificate has expired or is near the expiration date, the application unit 41 outputs a warning to the device operation unit 40 or the user terminals 30A and 30B via the network I/F 17.

Furthermore, based on the comparison result, when it is determined that the present time is before the expiration date and the difference between the present time and the expiration date is within a predetermined number of days, the application unit 41 determines that the public key certificate is near expiration, and displays, on the device operation unit 40, a selection screen for selecting whether to select an address of the corresponding user.

The address book management module 42 stores an address book including user information, and registers, calls, or deletes the data stored in the address book in response to a request from the application unit 41.

The address book management module 42 associates the public key certificate of the user with the expiration date information acquired by the certificate management module 44, and manages them by storing them in the user information. Specifically, the address book management module 42 registers a registration number, a user name, an e-mail address, a public key certificate, and a certificate starting date and an expiration date as expiration date information in an address book for each user, and manages this information.

When the address book management module 42 registers a public key certificate of a user in an address book in response to a request from the application unit 41, the address book management module 42 transfers a public key certificate to the certificate management module 44 and requests the certificate management module 44 to analyze the public key certificate. Furthermore, the address book management module 42 acquires, from the certificate management module 44, the certificate starting date and the expiration date of the public key certificate analyzed by the certificate management module 44, and registers this information together with the public key certificate.

As described above, when registering a public key certificate in an address book as part of user information, the address book management module 42 associates, with the public key certificate, the certificate starting date and the expiration date of the public key certificate required for verifying the expiration date of the public key certificate, and manages this information. When updating the public key certificate in response to a request from the application unit 41, the address book management module 42 performs the same process. Furthermore, when deleting the public key certificate, the address book management module 42 also deletes the certificate starting date and the expiration date corresponding to the public key certificate.

As described above, the address book management module 42 manages the address book so that the public key certificate is associated with the corresponding starting date and expiration date. An example of the data structure of the address book is described below.

When the application unit 41 determines that the public key certificate is valid, the mail sending module 43 sends an encrypted e-mail. Specifically, when a mail transmission request is received from the application unit 41, the mail sending module 43 acquires, for each address, the public key certificates registered in the address book by the address book management module 42, and transfers the acquired public key certificates to the encryption module 45. Furthermore, the mail sending module 43 sends the e-mail encrypted by the encryption module 45 to the mail server 20 via the network I/F 17.

The certificate management module 44 analyzes the public key certificate when registering the public key certificate of the user, and acquires expiration date information of the public key certificate. Specifically, in response to a report to analyze the public key certificate from the address book management module 42, the certificate management module 44 performs file format conversion and syntax analysis on the public key certificate acquired from the address book management module 42. The certificate management module 44 converts the certificate starting date and the expiration date of the public key certificate used as expiration date information, into integer values on which a comparison operation can be performed by the application unit 41. The converted certificate starting date and expiration date are transferred to the address book management module 42.

The encryption module 45 encrypts the e-mail acquired from the mail sending module 43 with a common key, and encrypts the common key with the use of the public key certificate acquired from the mail sending module 43. Furthermore, the encryption module 45 transfers the encrypted e-mail and the encrypted common key to the mail sending module 43.

As described above, in the present embodiment, when the public key certificate is registered in an address book, the certificate starting date and the expiration date required for verifying the expiration date of the public key certificate are extracted, and are managed in association with the public key certificate as part of user information. Accordingly, even during user operations, it is only necessary to acquire the certificate starting date and the expiration date from the address book to verify the expiration date of the public key certificate, and therefore the verification process can be immediately executed without analyzing the public key certificate.

### Device operation unit 40

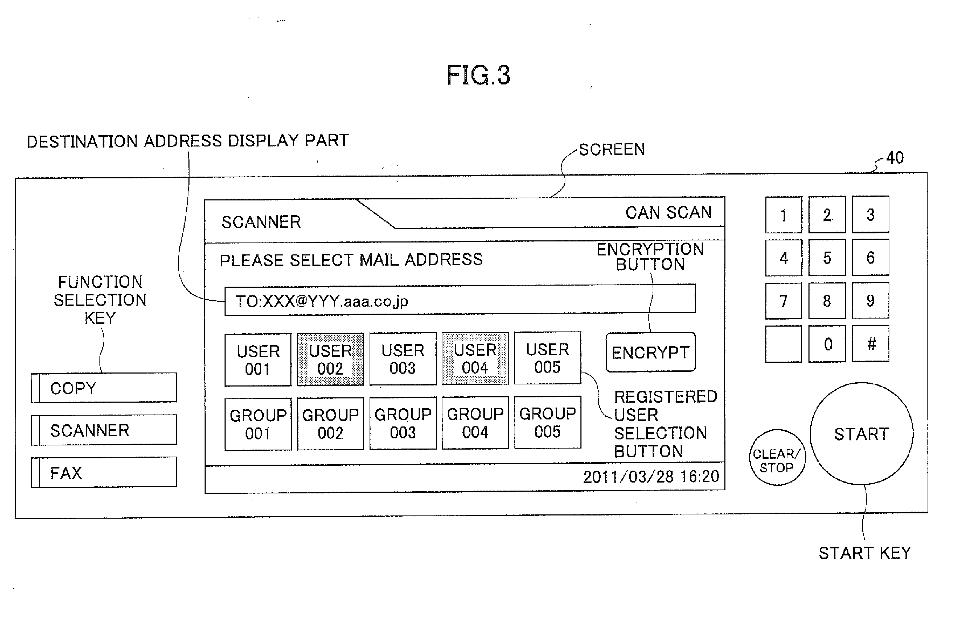

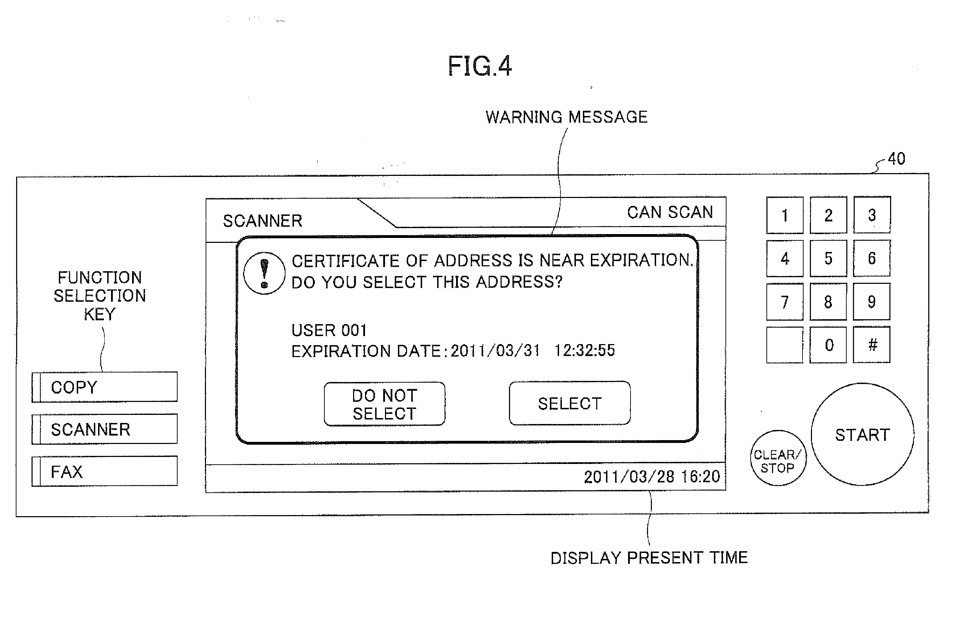

Next, with reference to FIGS. 3 and 4, a description is given of the device operation unit 40 of the image processing apparatus 10 described above. FIG. 3 illustrates an example of a screen of the device operation unit 40. FIG. 4 illustrates an example of a warning message to the user displayed on the screen of the device operation unit 40.

As illustrated in FIG. 3, the device operation unit 40 is, for example, an operation panel, and includes function selection keys for selecting functions such as "COPY", "SCANNER", and "FAX", push buttons such as a start key, an address display part for displaying mail addresses, and a screen for displaying registered user names registered in the address book of the device.

For example, if the screen is a touch panel, the encryption button and the registered user selection buttons for selecting registered user names may be located on the screen. In the example of FIG. 3, the user 002 and the user 004 are selected among the registered user names.

Furthermore, as illustrated in FIG. 4, in the present embodiment, the application unit 41 verifies the public key certificate of the registered user selected as the sending address, and when the public key certificate is determined as being expired or near expiration, a warning message can be displayed on the screen.

For example, when the public key certificate of a user has expired, a message saying that the e-mail cannot be sent is displayed. When the public key certificate is near expiration, a selection screen is displayed, and a message for prompting the user to select whether to send the e-mail and the expiration date can be displayed on the selection screen, so that the user (sender) can make a determination. At this time, the present date may be displayed so that the user can determine whether to send the e-mail.

In FIG. 4, as an example of a selection screen displayed near the expiration date of the public key certificate, a warning message saying "The public key certificate is near expiration. Do you select this address?", user information of the corresponding user (user 001), an expiration date (2011/03/31 12:32:55), and buttons for letting a user select either "do not select" and "select" are displayed. Furthermore, the present date (2011/3/28 16:20) is displayed. The display contents and the layout are not limited to the above examples.

### Conventional S/MIME transmission sequence

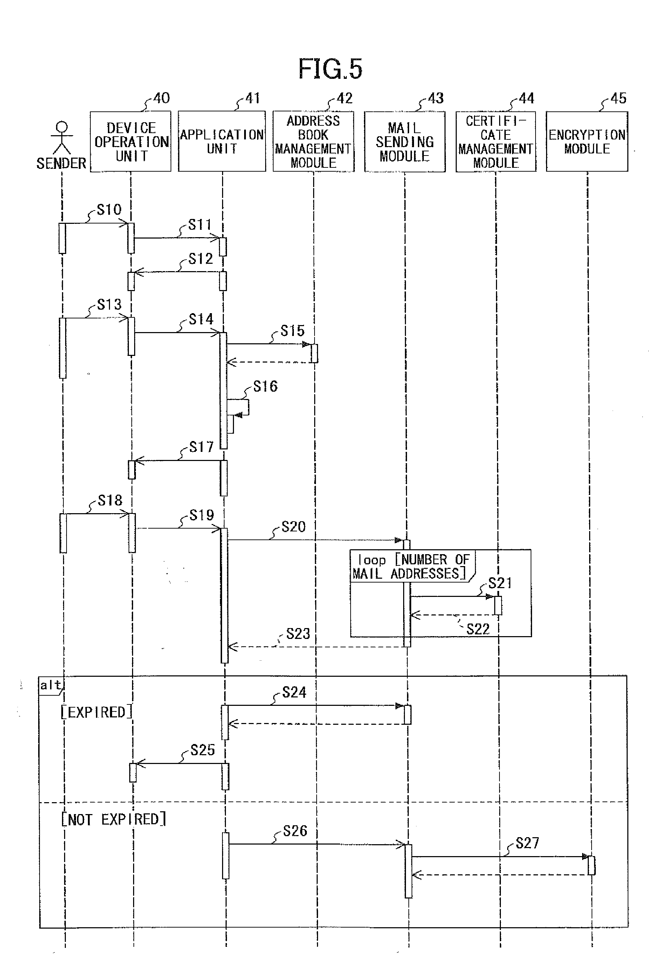

Next, with reference to FIG. 5, a description is given of an S/MIME transmission sequence implemented by a conventional image processing apparatus. FIG. 5 illustrates an example of a conventional S/MIME transmission sequence.

As shown in FIG. 5, in a conventional S/MIME transmission sequence, when the device operation unit 40 receives a setting indicating that the encryption option is valid from the sender (e.g., the user) (step S10), the device operation unit 40 sends an encryption option valid setting report to the application unit 41 (step S11), and receives an encryption option validity update report from the application unit 41 (step S12).

When the device operation unit 40 receives a setting selecting a mail address from the sender (step S13), the device operation unit 40 sends a mail address selection report to the application unit 41 (step S14). When the application unit 41 acquires user information corresponding to the mail address from the address book management module 42 (step S15), the application unit 41 adds the user information to the destination address (step S16), updates the address list, and sends a report to the device operation unit 40 (step S17).

When the sender presses the start key (step S18), the device operation unit 40 sends a transmission start report to the application unit 41 (step S19), and the application unit 41 sends a mail transmission request to the mail sending module 43 (step S20). Next, the mail sending module 43 sends a request to verify the public key certificate of the mail address to the certificate management module 44 (step S21). When a verification result is returned from the certificate management module 44 (step S22), the mail sending module 43 reports the verification result to the application unit 41 (step S23).

In the example of FIG. 5, different processes are performed depending on whether the verification result obtained at step S23 is "expired" or "not expired". Specifically, when it is determined that the public key certificate has expired, the application unit 41 sends, to the mail sending module 43, a request to cancel mail transmission (step S24).

The application unit 41 sends a request to display a warning to the device operation unit 40 (step S25).

Meanwhile, when it is determined that the public key certificate has not expired, the application unit 41 sends, to the mail sending module 43, a request to start mail transmission (step S26). The encryption module 45 executes an encryption process (step S27), and the mail encrypted at step S27 is transferred to the mail sending module 43.

In the example of FIG. 5, as the sender presses the start key, a mail transmission request is reported to the mail sending module 43, and subsequently, the certificate management module 44 analyzes the public key certificate and verifies the expiration date.

At this time, when it is determined that the public key certificate has expired, the operations performed up to the point of pressing the start key (for example, storing the scanned image in the HDD, adjusting the image quality, and inserting a digital signature), and the process of scanning the image by pressing the start key, are wasted. Therefore, there has been a need to verify the expiration date at an earlier stage in the operations.

### S/MIME transmission sequence according to present embodiment

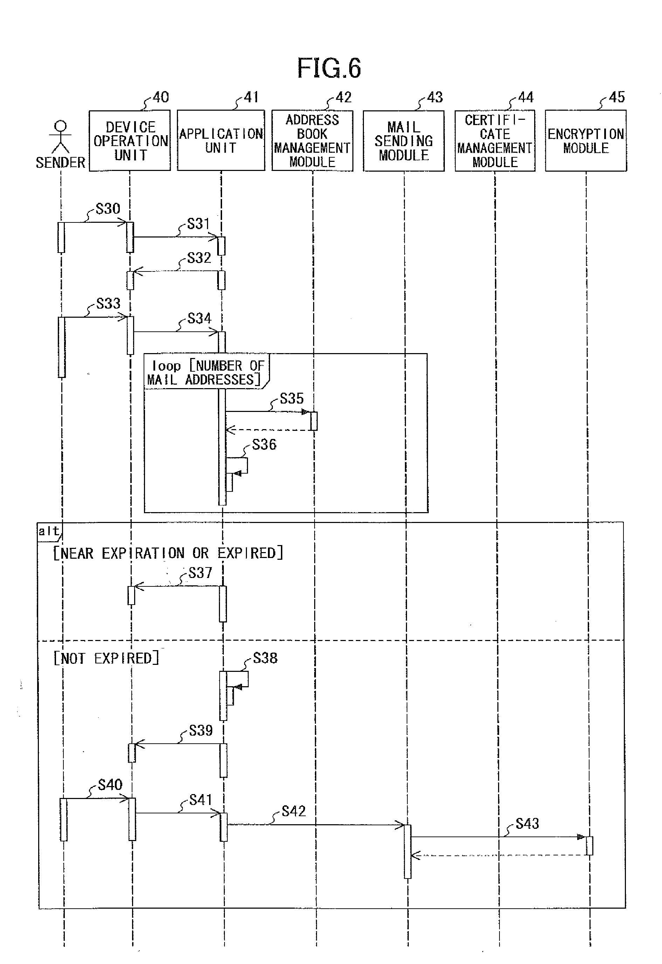

Next, with reference to FIG. 6, a description is given of an S/MIME transmission sequence implemented by the image processing apparatus 10 according to the present embodiment. FIG. 6 illustrates an example of an S/MIME transmission sequence according to the present embodiment. The processes of steps S30 through S34 in FIG. 6 are the same as those of steps S10 through S14 in FIG. 5, and are thus not further described.

As shown in FIG. 6, in S/MIME transmission sequence according to the present embodiment, when a mail address selection report is sent from the device operation unit 40 to the application unit 41 at step S34, the application unit 41 acquires user information corresponding to the selected mail address (for example, the starting date and the expiration date of the public key certificate) (step S35), and verifies the expiration date of the public key certificate (step S36). When plural mail addresses are collectively specified, as in a group address, the respective addresses are extracted and the verification processes is repeated for each of the specified mail addresses.

In the example of FIG. 6, different processes are performed depending on whether the verification result obtained at step S36 is "expired or near expiration" or "not expired". Specifically, when it is determined that the public key certificate has expired or is near expiration, the application unit 41 displays a warning on the device operation unit 40 (step S37).

Meanwhile, when it is determined that the public key certificate has not expired, the application unit 41 adds the corresponding address as a destination address (step S38), updates the address list, and sends a report to the device operation unit 40 (step S39).

Next, when the sender (e.g., the user) presses the start key (step S40), the device operation unit 40 sends a transmission start report to the application unit 41 (step S41), and the application unit 41 sends a mail transmission request to the mail sending module 43 (step S42). Then, the encryption module 45 executes an encryption process (step S43), and the mail encrypted at step S43 is transferred to the mail sending module 43.

To eliminate mail addresses that become expired while creating the mail, the expiration dates of the public key certificates may be verified again immediately before making the transmission start request.

As described above, in the present embodiment, when the conditions of "the encryption option is valid, and the mail address is selected" are satisfied, it is assumed that the user is intending to send a mail upon encrypting the mail, and therefore the expiration date of the public key certificate is verified. Here, it is determined whether the public key certificate has not expired by acquiring only the expiration date information registered in the address book, without analyzing the public key certificate. Accordingly, the expiration date of the public key certificate of the user specified in the mail address can be verified within a short period of time.

Furthermore, the expiration date is verified every time a mail address is selected, and therefore it is assured that any expired mail addresses are eliminated. Even when the encryption option becomes valid after plural addresses are selected, it is possible to verify the expiration date within a short period of time, and therefore it is not time consuming to perform the verification.

Furthermore, in the present embodiment, it is not necessary to perform a separate process of confirming whether the public key certificate has expired before pressing the start key. Therefore, the user can be warned not to use an expired public key certificate during regular user operations. Furthermore, this warning is given at an early stage of editing the mail, and therefore wasteful user operations can be eliminated.

Furthermore, even when the public key certificate is near expiration, the expiration date is presented on the selection screen, and the user can determine whether to send the mail. Therefore, it is possible to prevent a situation where the public key certificate becomes expired by the time the receiver receives the mail.

In the S/MIME transmission sequence of FIG. 6, the device operation unit 40 receives a setting of making the encryption option valid and a selection of a mail address from the user. However, the present invention is not so limited. These settings and selections may be received from the user terminals 30A and 30B.

### Data structure of address book

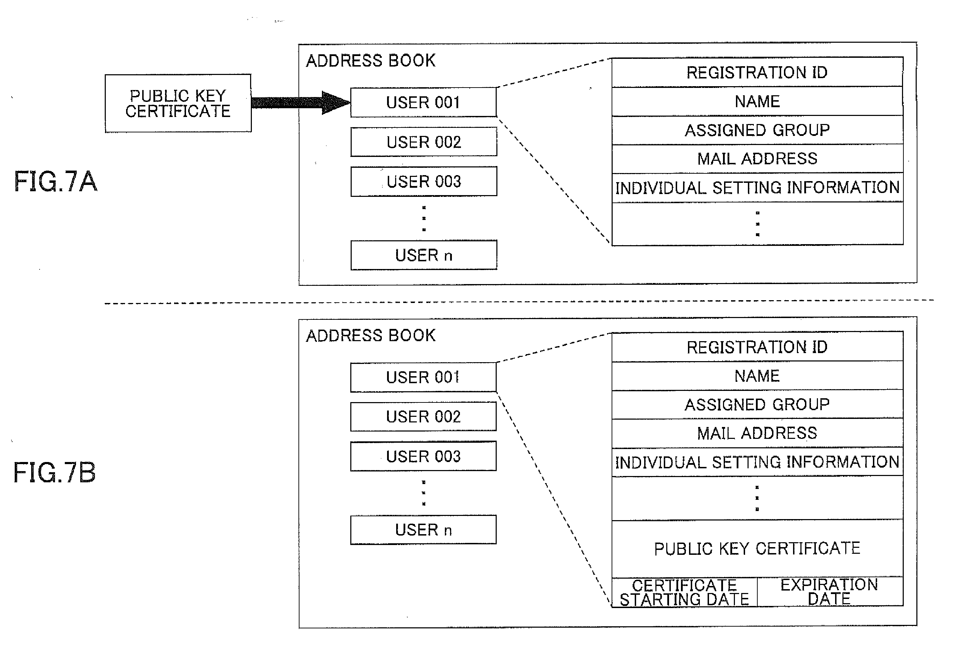

Next, with reference to FIGS. 7A and 7B, a description is given of a data structure of an address book when the above-described public key certificate is registered. FIGS. 7A and 7B illustrate examples of data structures of the address book when the public key certificate is registered.

FIG. 7A illustrates user information included in an address book when a public key certificate is registered for a user 001 in the address book. As shown in FIG. 7A, in the address book of the user 001, user information such as "registration ID", "name", "assigned group", "mail address", and "individual setting information" is registered.

FIG. 7B illustrates user information included in the address book when the public key certificate is normally registered for the user 001 in the address book. As shown in FIG. 7B, in the address book of the user 001, expiration information including the certificate starting date and the expiration date are registered in association with the public key certificate.

As described above, in the present embodiment, when registering a public key certificate in an address book, the address book management module 42 calls the certificate management module 44, and performs file format conversion and syntax analysis on the public key certificate in advance, and extracts the certificate starting date and the expiration date.

Therefore, in the present embodiment, as shown in FIG. 7B, the address book management module 42 can store the certificate starting date and the expiration date extracted by the certificate management module 44 in the address book in association with the public key certificate. The data structure of the address book according to the present embodiment is not limited to that of FIG. 7B; the item contents, the order, the data length, etc., may be arbitrarily set.

### Flow of process when registering public key certificate

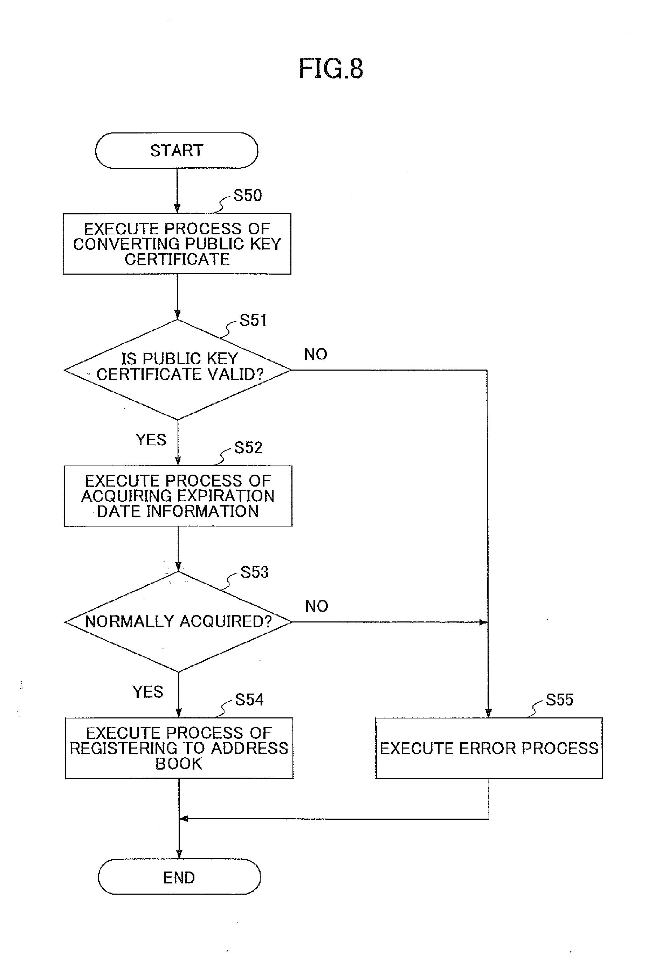

Next, with reference to FIG. 8, a description is given of an example of a process performed when the address book management module 42 registers a public key certificate in an address book. FIG. 8 is a flowchart of a process of registering a public key certificate. When registering the public key certificate, the address book management module 42 requests the certificate management module 44 to analyze the public key certificate, and transfers the public key certificate to the certificate management module 44.

As shown in FIG. 8, when the certificate management module 44 acquires a public key certificate from the address book management module 42, the certificate management module 44 executes a conversion process on the public key certificate stored in, for example, a binary format or in a text format encoded by base64 (step S50).

Next, the certificate management module 44 determines whether the public key certificate is valid, based on the contents of the converted public key certificate (step S51). At step S51, other than determining whether the public key certificate has not expired, verifications may be performed for one or more events among whether the mail address is that of a registered user, whether the certificate is signed by a trustworthy certificate authority, and whether the certificate is not outdated.

At step S51, when it is determined that the public key certificate is valid (YES in step S51), the address book management module 42 executes a process of acquiring expiration date information (certificate starting date and expiration date) of the public key certificate (step S52).

Next, the address book management module 42 determines whether the expiration date information of the public key certificate is normally acquired (step S53). When it is determined that the public key certificate is normally acquired (YES in step S53), the address book management module 42 executes a process of registering the expiration date information (step S54), and the process ends.

Meanwhile, when it is determined that the public key certificate is not valid (NO in step S51), or when it is determined that the public key certificate is not normally acquired (NO in step S53), the address book management module 42 executes an error process (step S55), and the process ends.

At step S53, when the expiration date information is not normally acquired from the public key certificate, the format of the public key certificate may be wrong, and the public key certificate cannot be associated with expiration date information. Therefore, it is determined that the public key certificate cannot be registered, and an error process is executed.

### Flow of process when deleting public key certificate

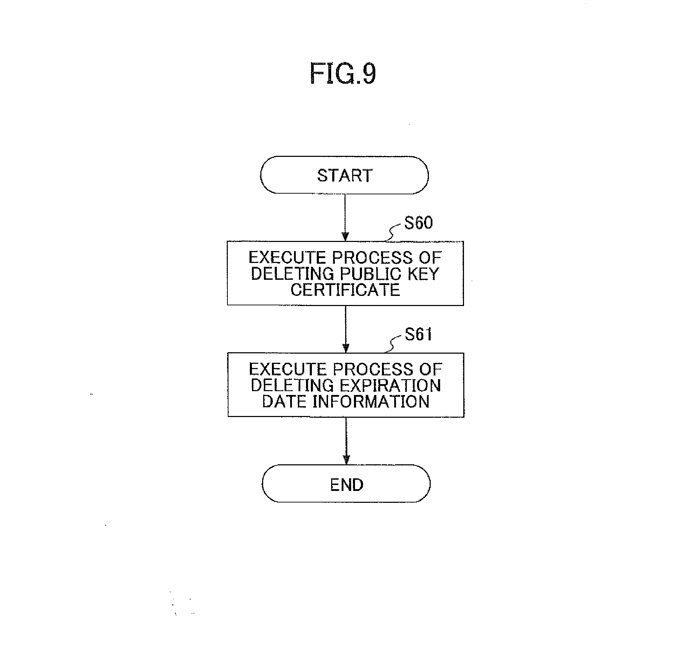

Next, with reference to FIG. 9, a description is given of an example of a process performed by the address book management module 42 for deleting the public key certificate from the address book. FIG. 9 is a flowchart of a process of deleting the public key certificate.

As shown in FIG. 9, the address book management module 42 executes a process of deleting the public key certificate from the address book, when deleting the public key certificate (step S60).

Next, the address book management module 42 executes a process of deleting expiration date information (certificate starting date and expiration date) of the expiration date information (step S61), and ends the process. Accordingly, in the address book, the expiration date information can be erased together with the public key certificate so that the expiration date information does not remain after the public key certificate is deleted.

As described above, according to an embodiment of the present embodiment, the operability for the user is improved when sending encrypted e-mails.

The image processing apparatus and the image processing system are not limited to the specific embodiments described herein, and variations and modifications may be made without departing from the scope of the present invention.

## Claims

1. An image processing apparatus for sending an encrypted e-mail to a terminal device of a user connected by a communication network, the image processing apparatus comprising:
an expiration date information acquiring unit configured to analyze a public key certificate of the user and acquire expiration date information of the public key certificate, when registering the public key certificate of the user;
a user information management unit configured to manage user information including the expiration date information acquired by the expiration date information acquiring unit and the public key certificate of the user, the expiration date information and the public key certificate being associated with each other in the user information;
an expiration date determining unit configured to determine whether the public key certificate of the user is valid based on the expiration date information managed by the user information management unit; and
a mail sending unit configured to send the encrypted e-mail, when the expiration date determining unit determines that the public key certificate is valid.

2. The image processing apparatus according to claim 1, wherein
the expiration date determining unit acquires the expiration date information of the public key certificate of the user from the user information management unit, when an encryption option is set to be valid and an address is set.

3. The image processing apparatus according to claim 1 or 2, wherein
the expiration date determining unit determines whether the public key certificate is valid by comparing a certificate starting date and an expiration date of the public key certificate included in the expiration date information, with a present time.

4. The image processing apparatus according to claim 3, wherein
the expiration date determining unit displays a warning when a comparison result obtained by the comparison with the present time indicates that the public key certificate has expired or the public key certificate is near expiration.

5. The image processing apparatus according to claim 4, wherein
the expiration date determining unit determines that the public key certificate is near expiration when the comparison result obtained by the comparison with the present time indicates that the present time is before the expiration date and a difference between the present time and the expiration date is within a predetermined number of days, and
displays a selection screen for selecting whether an address of a corresponding user, corresponding to the public key certificate determined as being near expiration, is to be selected.

6. The image processing apparatus according to any one of claims 1 through 5, wherein
when the user information management unit deletes the public key certificate, the user information management unit also deletes the expiration date information corresponding to the public key certificate.

7. An image processing system comprising:
a terminal device of a user; and
an image processing apparatus for sending an encrypted e-mail to the terminal device of the user, the image processing apparatus being connected to the terminal device by a communication network, the image processing apparatus including
an expiration date information acquiring unit configured to analyze a public key certificate of the user and acquire expiration date information of the public key certificate, when registering the public key certificate of the user,
a user information management unit configured to manage user information including the expiration date information acquired by the expiration date information acquiring unit and the public key certificate of the user, the expiration date information and the public key certificate being associated with each other in the user information,
an expiration date determining unit configured to determine whether the public key certificate of the user is valid based on the expiration date information managed by the user information management unit, and
a mail sending unit configured to send the encrypted e-mail, when the expiration date determining unit determines that the public key certificate is valid.

8. A non-transitory computer-readable recording medium storing a mail sending program that causes a computer to function as the respective units of the image processing apparatus according to any one of claims 1 through 6.
